Europäisches Patentamt

European Patent Office

Office européen des brevets

(11) Publication number: **0 222 539 B1**

# EUROPEAN PATENT SPECIFICATION

(45) Date of publication of patent specification: **02.01.92**    (51) Int. Cl.5: **C08L 67/06**, C09J 167/06, C09J 4/00

(21) Application number: **86308237.6**

(22) Date of filing: **23.10.86**

(54) Improvements in or relating to polyester resin composites.

(30) Priority: **31.10.85 GB 8526790**

(43) Date of publication of application:
**20.05.87 Bulletin 87/21**

(45) Publication of the grant of the patent:
**02.01.92 Bulletin 92/01**

(84) Designated Contracting States:
**AT BE CH DE FR IT LI NL SE**

(56) References cited:
**DD-A- 209 203**
**GB-A- 944 370**

**JAPAN PLASTIC AGE, vol. 12, no. 8, August 1974, pages 25-29; T. EGUCHI: "Aerosil as thixotropic agent for FRP"**

**H.S. KATZ et al.: "Handbook of fillers and reinforcements for plastics", pages 136-140, chapter B, van Nostrand Reinhold Co., New York, US; J.E. MORELAND: "Silica fillers, extenders and reinforcements"**

(73) Proprietor: **BIP CHEMICALS LIMITED**
**20 St. Mary's Parsonage**
**Manchester M3 2NL(GB)**

(72) Inventor: **Downing, Brian York**
**12 Frayne Avenue**
**Kingswinford Staffordshire(GB)**
Inventor: **Shaw, Michael Martin**
**25 Church Street**
**Halesowen West Midlands, B62 9LG(GB)**

(74) Representative: **Hadfield, Robert Franklin et al**
**Bowdon House PO Box 20 Ashburton Road**
**West Trafford Park**
**Manchester M17 1RA(GB)**

**Description**

This invention relates to polyester resin compositions, and more particularly to compositions of unsaturated polyester resins in which styrene is used as a solvent and monomer for the resin.

Polyester compositions of the kind just referred to are based on (a) an unsaturated polyester derived from a glycol component, for example propylene glycol, and a dicarboxylic acid component which must include one having ethylenic unsaturation, usually an $\alpha\beta$- unsaturated acid, such as maleic acid, and (b) an unsaturated monomer copolymerisable with the unsaturated polyester, for example, styrene.

Such resin compositions are used industrially for the production of composites eg with glass fibre, which are built-up layer upon layer. Emissions of styrene vapour from the compositions should desirably be kept to a minimum for environmental reasons but many of the methods tried hitherto to suppress styrene emissions unfortunately have a detrimental effect on interlaminar adhesion in composites produced therefrom.

Thus it is well known that small quantities (0.05 - 0.25%) of paraffin wax or other similar waxy materials may be added to unsaturated polyester resins to prevent loss of styrene monomer by evaporation when the resin is used in the construction of GRP composites in open moulds. In such cases, the wax migrates to the exposed surface of the composite prior to curing and forms a barrier which suppresses styrene emission. When cure has been achieved the wax layer remains on the surface of the moulding. If further layers of resin and reinforcement are then applied to the original laminate, as in the delayed lay-up technique, the presence of the wax results in poor interlaminar adhesion and such constructions readily delaminate when the composite is subjected to stress.

In order to provide resin systems which combine the advantages of low styrene emission and good interlaminar adhesion, the wax containing polyester system may be further modified by the addition of small quantities of an adhesion promotor. These materials are usually organic or organo metallic compounds, and their structures usually contain aliphatic hydrocarbon chains, together with hydrophilic groups and/or unsaturated groups. A number of such compounds are described in the patent literature; for example in the following:-

| | |
|---|---|
| GB 2011918 | EP 0032026 |
| GP 2065683 | EP 0072114 |
| GP 2069511 | US 4269745 |
| EP 008216 | DD 209203 |
| EP 0027666 | DD 209204 |

In our experience, few if any of the adhesion promoters described in these patents are totally acceptable, because the level of interlaminar adhesion which they provide is less than that required by the GRP Industry.

It is also normal practice to add small quantities (0.5 - 2.5%) of hydrophilic grades of fumed silica to unsaturated polyester resin solutions to impart thixotropy to the resin and thereby prevent drainage when the composition is applied to a vertical surface.

We have now found that hydrophobic fumed silica when used in unsaturated polyester resin compositions not only provides thixotropy in the resin solution but also acts as an adhesion promoter.

Thus according to the present invention an unsaturated polyester resin composition consists essentially of an unsaturated polyester resin and styrene as solvent and monomer and also includes additives comprising (a) a waxy material in an amount in the range 0.01 to 1.0 per cent by weight of the composition, to suppress evaporation of styrene from the composition, and (b) hydrophobic fumed silica in an amount in the range 0.01 to 2.5 per cent by weight of the composition, to retain interlaminar adhesion between layers incorporating the composition.

We have found by experiment that the amount of hydrophobic fumed silica and the amount of waxy material need to be balanced carefully against one another to achieve the desired result. If there is too much waxy material interlaminar adhesion will be too low and if there is too much of the hydrophobic fumed silica the styrene emission suppression effect of the waxy material will be lost.

The waxy material may be for example, stearyl stearate, or a paraffin wax having a congealing point in the range 45°C to 65°C, or mixtures thereof.

Fumed silica is available in a number of different grades of various particle sizes in both hydrophobic and hydrophilic types. The hydrophobic grades have surface treatment to render them thus and will generally be proprietary materials. We have tried hydrophobic grades of silica from three different sources

2

(Degussa AG (AEROSIL), Cabot-Carbon (CAB-O-SIL) and Wacher-Chemie). In each case the desired effect was obtained.

The waxy material is preferably present in the composition in an amount of 0.05 to 0.25 per cent by weight.

Hydrophobic fumed silica is preferably present in an amount of 0.1 to 2.0 per cent by weight of the composition, but the precise amount used to obtain the best result in each case must be determined by trial and error. Furthermore the hydrophobic fumed silica may be used in conjunction with another material, such as hydrophilic fumed silica, to obtain the right balance of properties in the composition overall.

Where hydrophilic fumed silica is used, the amount is not greater than 2.5% by weight of the composition, but preferably is not more than 1.0% by weight, and will generally be in the range 0.02 per cent to 1.0 per cent by weight.

The invention will now be described in more detail by means of examples.

Preparation of Conventional Unsaturated Curable Polyester Composition

The following materials were heated together at 200° C until the product had an acid value of 30-50 mg. KOH/g.

| 1.545 moles | ethylene glycol |
| 1.545 moles | propylene glycol |
| 2.0 moles | phthalic anhydride |
| 1.0 mole | maleic anhydride |

The solidproduct was dissolved in styrene to form a solution containing 57.5% by weight of resin and 42.5% by weight of styrene, and to this solution was added a conventional cobalt naphthenate accelerator (containing 10% by weight of cobalt metal) in an amount forming 0.2% by weight of the whole. This is the formulation referred to hereafter as the "base resin".

Method of Preparation of Experimental Formulations

The required quantity of fumed silica was added to the polyester base resin and dispersion was achieved by mixing for 30 minutes with a Silverson Disperser and the product was then refined by passing through a single roll mill. Finally, 5.0 parts of styrene per 95 parts of base resin was added and blended in. In those cases where paraffin wax was incorporated into the formulation, this component was first of all dissolvd in the 5.0 parts of styrene monomer at 60° C before adding to the resin dispersion.

The grade of paraffin wax used in our experiments was Flowax 210B, which is a prilled grade of wax with a congealing point of 54 - 55°C and is supplied by Astor Chemical Limited.

Evaluation and Test Procedures

The evaluation of the experimental formulations was solely concerned with establishing the effect that the various grades of fumed silica had on the application properties of the resin, namely, viscosity and degree of thixotropy, and on the styrene emission and interlaminar adhesion characteristics.

The test methods used are summarised below.

1. Viscosities were measured at ambient temperature (18 - 22°C) at two shear speeds, 5 and 50 rpm, using a Brookfield Viscometer, Model RVT with spindle RV4. For our purposes "Thixotropic Index" is defined as the ratio.

$$\frac{\textbf{Viscosity (poise) at 5 rpm}}{\textbf{Viscosity (poise) at 50 rpm}}$$

2. Styrene Emission and interlaminar adhesion was determined by the procedures described in Publication Number 302/1 issued by the British Plastics Federation, August 1984.

The results for styrene emission are expressed as the number of grms of styrene monomer lost from a standard "open" laminate per square meter of exposed surface per hour.

3

The results for interlaminar adhesion are assessed on a scale of 0 - 8 depending on the level of fibre pull-out achieved when a fully cured GRP laminate, constructed by the delayed lay-up technique, is pulled apart.

0 signifies no interlaminar adhesion (complete absence of fibre pull-out).

8 signifies complete interlaminar adhesion (very heavy fibre pull-out).

The results which were obtained are given in Table 1 below.

TABLE 1

| Example Number | 1 | 2 | 3 | 4 |
|---|---|---|---|---|
| Aerosil 200 (%) | 0.75 | 0.75 | 0.75 | |
| Aerosil R972 (%) | | | 0.75 | 1.5 |
| Flowax 210B (%) | 0.00 | 0.075 | 0.075 | 0.075 |
| Viscosity @ 5rpm (poise) | 15 | 21.6 | 29.0 | 13.2 |
| Thixotropic Index | 2.50 | 2.60 | 2.79 | 2.04 |
| Styrene Emission | 65 | 11.5 | 24.0 | 9.6 |
| Interlaminar Adhesion | 8 | 0 | 5 | 7-8 |

In the table "Aerosil" 200 is a hydrophilic grade of silica with a BET surface of 200 $m^2/g$ and average primary particle size of 12 nanometres and "Aerosil" R972 is a hydrophobic grade of silica with a BET surface area of 110 $m^2/g$ and average primary particle size of 16 nanometres, both being commercially available from Degussa AG.

In the table Examples 1 and 2 are included for purely comparative purposes.

Example 1 illustrates the high level of styrene emission from an unsuppressed resin system. The other properties obtained with this system are all commercially acceptable.

Example 2 illustrates the styrene suppression effect of wax inclusion, but accompanied by total loss of acceptable interlaminar adhesion.

In Example 3 hydrophobic silica has been added to the hydrophilic silica used in Example 2. The resulting composition shows some interlaminar adhesion but not yet good enough.

In Example 4 the styrene emission level is very low yet the interlaminar adhesion has been almost fully restored.

Examples 5 to 9

In examples 5 to 9 the use of hydrophobic fumed silica from different sources is illustrated, as is the use of hydrophobic and hydrophilic fumed silicas together.

The unsaturated polyester base resin used was the same as in Examples 1 to 4 as was the procedure used to make up the compositions. Test methods used were also the same.

The details of the additives used in the compositions are given below in Table 2 (amounts of additives being expressed as per cent by weight of total composition) and the results of the tests performed on each composition are also given.

## TABLE 2

| Example Number | 5 | 6 | 7 | 8 | 9 |
|---|---|---|---|---|---|
| Aerosil 200 (%) | 0.75 | 0.5 | 0.5 | 0.5 | - |
| Aerosil R972 (%) | 1.0 | - | - | - | - |
| Aerosil R202 (%) | - | 0.25 | 0.25 | - | - |
| CAB-O-SIL N70TS (%) | - | - | - | 0.5 | - |
| Silica HDK H30 (%) | - | - | - | - | 1.5 |
| Flowax 210B (%) | 0.075 | 0.1 | 0.15 | 0.1 | 0.075 |
| Viscosity @ 5rpm (poise) | 35.2 | 16.6 | 16.8 | 21.2 | 24.0 |
| Thixotropic Index | 2.95 | 2.37 | 2.36 | 2.58 | 2.53 |
| Styrene Emission | 25.6 | 24.8 | 19.4 | 24.0 | 14.4 |
| Interlaminar Adhesion | 7-8 | 8 | 8 | 8 | 6-7 |

In the table CAB-O-SIL N70TS is a hydrophobic grade of silica with a BET surface area of 100 m$^2$/g commercially available from Cabot-Carbon.

"Aerosil R202" is another hydrophobic grade of silica with a BET surface area of 80 m$^2$/g and average primary particle size 14 nanometres commercially available from Degussa AG.

Silica HDK H30 is a hydrophobic grade of silica with a BET surface area of 250 m$^2$/g commercially available from Wacker Chemie.

Examples 5 to 8 all employ a mixture of hydrophobic and hydrophilic silicas and all show a combination of acceptable to good interlaminar adhesion with much reduced styrene emission. In example 5 the viscosity of the composition was slightly high and in Example 9 the interlaminar adhesion was slightly lower than in the others but all these compositions show vast improvements over a standard composition, with styrene emission less than half the standard, and interlaminar adhesion retained.

## Claims

1. An unsaturated polyester resin composition which consists essentially of an unsaturated polyester resin and styrene as solvent and monomer and also includes additives comprising (a) a waxy material in an amount in the range 0.01 to 1.0 per cent by weight of the composition, to suppress evaporation of styrene from the composition, and (b) hydrophobic fumed silica in an amount in the range 0.01 to 2.5 per cent by weight of the composition, to retain interlaminar adhesion between layers incorporating the composition.

2. A composition according to claim 1, in which the amount of waxy material is in the range 0.05 to 0.25 per cent by weight of the composition.

3. A composition according to claim 1 or 2, wherein the waxy material is a paraffin wax.

4. A composition according to claim 1 or 2,wherein the waxy material is stearyl stearate.

5. A composition according to any of claims 1 to 4 in which the amount of said hydrophobic fumed silica is in the range 0.1 to 2.0 per cent by weight of the composition.

**6.** A composition according to any one of the preceding claims including as a further additive hydrophilic fumed silica in an amount not greater than 2.5 per cent by weight of the composition.

**7.** A composition according to claim 6 in which the amount of hydrophilic fumed silica is not greater than 1.0 per cent by weight of the composition.

**8.** A composition according to claim 7 in which the amount of hydrophilic fumed silica is in the range 0.02 per cent to 1.0 per cent by weight of the composition.

**Revendications**

**1.** Composition de résine de polyester insaturé qui consiste essentiellement en une résine de polyester insaturé et en styrène comme solvant et monomère et contient aussi des additifs comprenant (a) une matière cireuse en une quantité de l'intervalle de 0,01 à 1,0% du poids de la composition pour supprimer l'évaporation du styrène de la composition et (b) de la fumée de silice hydrophobe en une quantité de l'intervalle de 0,01 à 2,5% du poids de la composition, pour conserver l'adhérence interlaminaire entre les couches comprenant la composition.

**2.** Composition suivant la revendication 1, dans laquelle la quantité de matière cireuse se situe dans l'intervalle de 0,05 à 0,25% du poids de la composition.

**3.** Composition suivant la revendication 1 ou 2, dans laquelle la matière cireuse est une cire de paraffine.

**4.** Composition suivant la revendication 1 ou 2, dans laquelle la matière cireuse est le stéarate de stéaryle.

**5.** Composition suivant l'une quelconque des revendications 1 à 4, dans laquelle la quantité de la fumée de silice hydrophobe se situe dans l'intervalle de 0,1 à 2,0% du poids de la composition.

**6.** Composition suivant l'une quelconque des revendications précédentes, comprenant comme additif supplémentaire de la fumée de silice hydrophile en une quantité non supérieure à 2,5% du poids de la composition.

**7.** Composition suivant la revendication 6, dans laquelle la quantité de fumée de silice hydrophile n'est pas supérieure à 1,0% du poids de la composition.

**8.** Composition suivant la revendication 7, dans laquelle la quantité de fumée de silice hydrophile se situe dans l'intervalle de 0,02 à 1,0% du poids de la composition.

**Patentansprüche**

**1.** Ungesättigte Polyesterharz-Zusammensetzung, welche im wesentlichen aus einem ungesättigten Polyesterharz und Styrol als Lösungsmittel und Monomer besteht und daneben Additive enthält, die
(a) einen Wachsstoff in einer Menge im Bereich von 0,01 bis 1,0 Gew.-% der Zusammensetzung zum Unterdrücken der Verdampfung von Styrol aus der Zusammensetzung, und
(b) hydrophobes pyrogenes Siliciumdioxid in einer Menge im Bereich von 0,01 bis 2,5 Gew.-% der Zusammensetzung enthalten, um interlaminare Verbundwirkung zwischen Schichten zu erreichen, die die Zusammensetzung einbaut enthalten.

**2.** Zusammensetzung nach Anspruch 1, wobei die Menge des Wachsmaterials im Bereich von 0,05 bis 0,25 Gew.-% der Zusammensetzung liegt.

**3.** Zusammensetzung nach Anspruch 1 oder 2, wobei der Wachsstoff ein Paraffinwachs ist.

**4.** Zusammensetzung nach Anspruch 1 oder 2, wobei der Wachsstoff Stearylstearat ist.

**5.** Zusammensetzung nach einem der Ansprüche 1 bis 4, wobei die Menge des hydrophoben pyrogenen Siliciumdioxids im Bereich von 0,1 bis 2,0 Gew.-% der Zusammensetzung liegt.

6. Zusammensetzung nach einem der vorhergehenden Ansprüche, enthaltend als weiteres Additiv hydrophiles pyrogenes Siliciumdioxid in einer Menge von nicht mehr als 2,5 Gew.-% der Zusammensetzung.

7. Zusammensetzung nach Anspruch 6, wobei die Menge des hydrophilen pyrogenen Siliciumdioxids nicht mehr als 1,0 Gew.-% der Zusammensetzung beträgt.

8. Zusammensetzung nach Anspruch 7, wobei die Menge des hydrophilen pyrogenen Siliciumdioxids im Bereich von 0,02 bis 1,0 Gew.-% der Zusammensetzung liegt.